## Europäisches Patentamt

(19) **European Patent Office**

**Office européen des brevets**

(11) Veröffentlichungsnummer: **0 248 109**

**A1**

(12) # EUROPÄISCHE PATENTANMELDUNG

(21) Anmeldenummer: **86114841.9**

(22) Anmeldetag: **25.10.86**

(51) Int. Cl.³: **F 03 B 9/00**

(30) Priorität: **05.06.86 US 870972**

(43) Veröffentlichungstag der Anmeldung:
**09.12.87 Patentblatt 87/50**

(84) Benannte Vertragsstaaten:
**AT BE CH DE ES FR GB IT LI NL SE**

(71) Anmelder: **Klute, Ferdinand**
**Fixberg 6**
**D-4790 Paderborn(DE)**

(72) Erfinder: **Klute, Ferdinand**
**Fixberg 6**
**D-4790 Paderborn(DE)**

(74) Vertreter: **Hoefer, Theodor, Dipl.-Ing.**
**Kreuzstrasse 32**
**D-4800 Bielefeld 1(DE)**

(54) **Druckflächen-Transmissions-Kraftanlage.**

(57) Bei einer Druckflächen-Transmissions-Kraftanlage zur Nutzbarmachung der natürlichen Strömungsgefälle von Wasser- und Windmengen sind mehrere gleichartige, parallel angeordnete, nach oben offene Kanäle (30) mit jeweils rechteckigem Querschnitt vorgesehen, wobei in jedem Kanal (30) zwei mit einer Hauptwelle (31) verbundene, als Antriebe wirkende rechteckige, in Querschnittsebenen des Kanals (30) sich erstreckende Druckplatten (36) in Strömungsrichtung geradlinig verschiebbar angeordnet sind. Eine solche Anlage ermöglicht es, die Bewegungsenergie von flachen Strömungen zur Energiegewinnung zu nutzen, wobei in jedem Kanal (30) eine im unteren Teil des Querschnitts von der Flüssigkeitsströmung verschobene Druckplatte (36) die Hauptwelle (31) antreibt, während die andere Druckplatte (36) sich im oberen Teil des Querschnitts des Kanals (30) in ihre Ausgangsstellung zurückbewegt, um dann in den unteren Teil und in die Strömung einzutauchen.

Fig.2

Patentanwalt
# Dipl.-Ing. Th. Hoefer

4800 Bielefeld 1, den
Kreuzstraße 32
Telefon (05 21) 17 10 72 - Telex 9 - 32 449

Bankkonten: Commerzbank AG, Bielefeld 6 851 471 (BLZ 480 40X
Sparkasse Bielefeld 72 001 563 (BLZ 480 501 61)
Postscheckkonto: Amt Hannover 689 28-304

Zugelassener Vertreter beim Europäischen Patentamt
Prof. Representative before the European Patent Office
Mandataire agréé près l'Office européen des brevets

**0248109**

Diess.Akt.Z.: E 53

Herr Ferdinand Klüte, Fixberg 6, 4790 Paderborn

## Druckflächen-Transmissions-Kraftanlage

Die Erfindung betrifft eine Druckflächen-Transmissions-Kraftanlage zur Nutzbarmachung der natürlichen Strömungsgefälle von Wasser- und Windmengen, mit mehreren gleichartigen, parallel angeordneten, nach oben offenen Kanälen mit jeweils rechteckigem Querschnitt, wobei in jedem Kanal zwei mit einer Hauptwelle verbundene, als Antriebe wirkende rechteckige, in Querschnittsebenen des Kanals sich erstreckende Druckplatten in Strömungsrichtung geradlinig verschiebbar angeordnet sind, die in oberen und unteren umlaufenden Führungsnuten der Kanalwände geführt sind,
wobei jede Führungsnut zwei übereinander verlaufende
waagerechte Teile aufweist, die strömungsauslaufseitig
durch halbkreisförmige Nutenbögen miteinander verbunden
sind.

Druckflächen-Transmissions-Kraftanlagen sind in verschiedenen Ausführungen, z.B. als Turbinen oder als Wassermühlen, bekannt. Hierbei hat sich in der Praxis gezeigt, daß beim wirtschaftlichen Einsatz von Turbinen
ein großes Druckgefälle erforderlich ist, was die Installation von langen und großen Zubringer-Rohrleitungen
oder in Bezug auf Stauseen bzw. Rückhaltebecken hohe
Staumauern, erforderlich machte. Die Verlegung erwähnter
Zubringer-Rohrleitungen ist besonders in gebirgigem Erdreich kostspielig.

Der Erfindung liegt die Aufgabe zugrunde, eine Kraftanlage zu schaffen, die es ermöglicht, auf große Zubringer-
Rohrleitungen und Höhenunterschiede zu verzichten, wobei
die Druckflächen der Anlage von den Strömungsmengen des
Wassers angetrieben werden und sich gemeinsam in die
gleiche geradlinige Richtung bewegen.

Diese Aufgabe wird erfindungsgemäß dadurch gelöst, daß
jeweils der Nutenbogen der unteren Führungsnut unterhalb
eines Umlenkrades einer in der oberen Führungsnut verlaufenden Gliederkette in Strömungsrichtung versetzt
angeordnet ist, während die waagerechten Teile strömungseinlaufseitig durch eine geradlinige, zum Kanalboden
in einem spitzen Winkel stehende Nutenstrecke miteinander verbunden sind, die an ihrem unteren Ende über
einen Bogen mit dem unteren waagerechten Teil der unteren Führungsnut verbunden ist. Bevorzugt sind bei der Anlage obere Querstreben der Druckplatten nur an den beidseitigen oberen Enden mit Gliederketten verbunden, während die beidseitigen äußeren Enden von unteren Querstreben mit Gleitrollenlagern versehen sind und durch untere Führungsnuten geführt werden, die an oder in den Kanalwänden befestigt sind.

Bei einer solchen Anlage wird infolge des Staudrucks der strömenden Wassermengen die Druckplatte jeweils verschoben, die wiederum über Gliederketten und treibende Zahnräder eine Hauptwelle antreibt. Die Kraftanlage eignet sich besonders für den Einsatz in Flüssen, die über erhöhte natürliche Uferböschungen verfügen, sowie als Auslauf von Rückhaltebecken oder auch größeren Stauseen sowie für den Einsatz in den Gezeitenzonen an den Küsten.

Im stark vergrößertem Maßstab ist die Anlage auch als Windkraftwerk einzusetzen, wenn die Gesamtkonstruktion im Zentrum und auf dem äußersten Schienen-Radius drehbar gelagert ist, so daß durch/ eine Steuerungsvorrichtung immer alle vorderen rechten Kanalöffnungen den Windströmungsmengen zugewandt sind.

Im folgenden wird ein Kanal vorerst mit zwei Druckflächen beschrieben, die sich jeweils in einer Kanalhälfte befinden. Die Druckfläche jeder Kanalhälfte erstreckt sich in Querrichtung der Strömung jeweils über die gesamte Kanalbreite. Diese rechteckige Druckfläche ist in dem Kanal in Strömungsrichtung geradlinig verschiebbar angeordnet, so daß die konventionell erforderliche energiehemmende Richtungsänderung der Strömungsmassen vermieden wird. Die Druckfläche besteht aus einem rechteckig geformten strukturierten Stahlprofilrahmen, der beidseitig mit profilierten Stahlblechen verkleidet ist.
An der Oberkante des Rahmens ist eine obere Querstrebe
befestigt, die mit ihren überstehenden Enden in die in
den Wänden liegenden seitlichen oberen Führungsnuten
hineinragt und mit in den Gliederketten eingebauten
Rollen verbunden ist. Die Unterkante des Rahmens ist
mit einer unteren Querstrebe verbunden, deren seitliche
überstehende Enden haben Gleitrollen und ragen in die
in den Wänden liegenden beidseitigen unteren Führungsnuten hinein. Vor und hinter den Gleitrollen sind Schaberbürsten befestigt, die auf den Enden der unteren Querstrebe drehbar gelagert sind und eine saubere Lauffläche
gewährleisten. Die waagerechte sowie allgemeine Führung
der Gleitrollen übernehmen die seitlich an oder in den
Wänden gelagerten unteren Führungsnuten.

Die Druckfläche selbst lehnt sich mit der Oberkante
gegenüber ihrer Unterkante um ungefähr 10° zu den ankommenden Strömungsmassen hin. Somit ist eine vertikale
Verkeilung der Druckfläche an ihren vorstehenden Streben
zwischen der oberen und der unteren Führungsnut ausgeschlossen, weil der Druck der Strömungsmassen auf die
Druckfläche sich zum Zug bei der oberen Querstrebe umwandelt.

Zu diesem Zeitpunkt der Erläuterung sollte man die
eigentlich verblüffende, aber doch technisch einleuchtende Wirkung der Gegendruck-Neutralisierung beschreiben,
die sich während des Betriebs der Anlage zwischen den
oberen Strebenkettenrollen und den unteren Strebengleitrollen ergibt. Durch den Staudruck der Strömungsmassen
auf die Druckfläche und durch die Überwindung des Trägheitsmoments der Gliederketten entsteht an den oberen Querstreben-Kettenrollen auf dem Boden des unteren Teils der oberen Führungsnut ein vertikaler Druck, der durch einen Gegendruck der Gleitrollen auf die Decke des unteren Teils der unteren Führungsnut aufgefangen, also neutralisiert wird. Somit ist der Druck von oben durch den Gegendruck von unten statisch neutralisiert. Die Wirkung der statischen Druck-Neutralisierung ermöglicht erst die Anwendbarkeit und Nutzbarmachung der beschriebenen Kraftanlage.

Die oberen Führungsnuten sind jeweils so ausgebildet, daß sie dem Verlauf der Gliederketten entsprechen, während die unteren Führungsnuten die Führung und Lagerung der Gleitrollen übernehmen. Durch die gegenüber den oberen Führungsnuten im vertikalen Bereich verschiedene Führung der unteren Führungsnuten und die Abstandsunterschiede zwischen den unteren und oberen Führungsnuten erhalten die Druckflächen einmal eine um 10° geneigte, fast senkrechte Arbeitsposition und zum anderen auf dem Rückweg eine Schräglage, die z.B. bei einer Windkraftanlage den Windmengen auf dem Rückweg zum Eintauchpunkt geringeren Widerstand entgegensetzt. Natürlich sind diese Stellungen der Druckflächen nur unter der Voraussetzung zu erreichen, daß der Abstand der Querstreben in allen Betriebslagen dem jeweiligen positionsabhängigen Mittenabstand zwischen den oberen und den unteren Führungsnuten in den verschiedenen Positionen entspricht.

Der Kanal, durch den die Strömungsmengen des strömenden Mediums, also des Wassers, geleitet werden, nimmt alle beweglichen und unbeweglichen Teile der Kraftanlage auf. Vorzugsweise werden mehrere gleichartige parallel

angeordnete Kanäle mit jeweils rechteckigem Querschnitt zu einer Anlage zusammengefügt. Jeder Kanal hat zwei Längshälften und nimmt in der Mitte oberhalb der Wasseroberfläche die Hauptwelle auf. Diese läuft zu der Längsrichtung der Kanäle, also zu der Strömungsrichtung, rechtwinklig und liegt in den Kanälen oberhalb der Verbindungslinie von allen Achsen der Antriebsumlauf- und Umlenkräder.

In jedem Kanal sind an den Innenseiten oberhalb der Wasseroberfläche je vier Umlenkräder an beiden Seiten angeordnet, wobei jeweils zwei von diesen Umlenkrädern in der Mitte des Kanals mit dem Antriebsrad der Hauptwelle verzahnt sind. Über die einzelnen Umlaufräder-Paare sind Endlos-Gliederketten gespannt.

Die Gliederketten, von denen jede Druckfläche über die seitlich abstehenden oberen Querstreben geführt ist, befinden sich an bzw. in den beiden Seitenwänden des Kanals und verlaufen mit ihrem unteren Teil immer in Strömungsrichtung und mit ihrem oberen Teil entgegengesetzt derselben. Bei der Anordnung innerhalb der Seitenwände können nischenförmige Umlaufführungen mit U-Profil vorgesehen werden, die zur Kanalinnenseite offen sind. Die obere und untere Begrenzung der nischenförmigen Ausnehmungen entsprechen der Höhe der Gliederkette zuzüglich der erforderlichen Toleranz bzw. der Gleitrollen.

Außer den oberen Umlaufführungen mit geringen Abständen voneinander im waagerechten Teil befinden sich in jeder Kanalhälfte an beiden Seitenwänden die unteren Führungsnuten. Diese haben bei dem waagerechten Teil einen doppelten oder mehrfachen Abstand gegenüber der oberen Umlaufführung. Jede untere Umlaufführung hat im Anfang jeder Kanalhälfte rechtsseitig eine innenwinklig schräg nach unten geradlinig verlaufende Führungsnut, die sich am unteren Ende durch einen Bogen mit dem unteren waagerechten Teil der unteren Führungsnut verbindet und am oberen Ende eine Öffnung hat, die durch eine vorgespannte Blattfeder verdeckt ist.

Die beiden linksseitigen Enden der waagerechten unteren Führungsnuten sind mit einem Führungsnutenhalbkreis verbunden, der gegenüber dem jeweiligen Antriebsumlenk- und Umlenkrad aus der Vertikalen waagerecht versetzt ist. Der untere Teil der oberen waagerechten Führungsnuten hat mit dem oberen Teil der unteren Führungsnuten eine gemeinsame Zwischenwand. Am Kanalboden ist unterhalb jeder Druckplatte ein bestimmter auf die Dauerleistung der Zylinder-Turbinen bezogener Freiraum belassen, durch den auch anfallende Sedimente laufend abgeführt werden. Am Anfang jedes Kanals befindet sich eine Strömungsblende, die die Strömungsmengen von dem Eintauchpunkt der Druckflächen im Anfang der rechten Kanalhälfte abdecken soll. Diese Aufgabe wird im Anfang der linken Kanalhälfte von der auftauchenden Druckfläche in der rechten Kanalhälfte übernommen.

Die Höhe der Wasseroberfläche im Kanal liegt immer unterhalb des oberen waagerechten Teils der unteren Führungsnut, damit die Druckfläche auf ihrem Rückweg zum Eintauchpunkt nicht der Gegenströmung der Wassermassen ausgesetzt ist. Im letzten Drittel einer jeden linken Kanalhälfte ist in der Bodendecke eine Öffnung angeordnet, die im folgenden Fallschleuse genannt wird, und die so breit ist wie der Kanal selbst. Diese Fallschleuse führt zum unter ihr liegenden Bodenkanal, der sich in der ganzen Breite des Kanals erstreckt und zum Ende der linken Kanalhälfte offen ist.

Am Ende jeder linken Kanalhälfte befindet sich jeweils in Bodennähe des Kanals bzw. des Bodenkanals je eine Zylinderturbine, die sich der Länge nach über die lichte Weite des Kanals erstreckt. Die Lager dieser Zylinder-turbinen sind außerhalb der Kanäle am Ende der Kanalwände angeordnet und zwar mit einem Abstand von einem halben Turbinendurchmesser von diesen Wandenden. Die Höhenlage der Turbinenachsen entspricht in etwa dem höchsten Punkt der Bodenerhöhung vom Kanalboden am äußersten Ende der jeweilig erwähnten Bodenoberfläche.

Im Freiraum unterhalb jeder Druckfläche fließen bestimmte Strömungsmengen fortdauernd ohne irgendwelche Unterbrechungen dem stetig offenen Ende eines jeden Kanals und Bodenkanals zu. Durch die in der Fallschleuse eingebauten, justierten und festgestellten, aus Stahlblechen angefertigten Leitschaufeln, die sich der Länge nach in Kanalbreite erstrecken, wird die Strömungsmenge des Wassers so verteilt, daß die Zylinderturbinen des Kanals und die des dazugehörigen Bodenkanals die gleichen Anteile der anfallenden Strömungen erhalten. Die Gesamtkraftanlage könnte eine Länge von 30 m und mehr haben bei einem Gefälle von 1:15 oder vielleicht nur 1:20, damit die Strömungsmenge möglichst schnell den jeweiligen Kanal verlassen, wenn sich die Druckfläche am Ende jeder linken Kanalhälfte von den Strömungsmengen abhebt und sich auf den Rückweg zum Eintauchpunkt begibt, während gleichzeitig die Druckfläche der rechten Kanalhälfte eintaucht.

Die sichtbaren Vorderseiten aller Umlenkräder sind mit den Kanalinnenseiten eben. Alle Umlenkräder in der unmittelbaren Umgebung der Hauptwelle haben zur Wandseite hin Zahnräder. Diese sind paarweise gegenüberliegend mit dem jeweiligen Antriebsrad der Hauptwelle verzahnt. Die Hauptwelle führt in der Querschnittsebene durch die Mitte aller Kanäle und nimmt die gesamte von den Strömungsmassen an die Druckfläche abgegebene Energie auf.

Der Vorgang des Eintauchens, Verschobenwerdens und Auftauchens der Druckplatten findet während des Betriebes in allen Kanälen abwechselnd statt, jedoch nach bestimmten Intervallen, so daß gewisse jeweilige ganz kurz auftretende Nullenergie-Stellungen beim Aus- bzw. Eintauchen zweier Druckplatten von den anderen überbrückt werden, die sich im eingetauchten Zustand in den Nachbarkanälen befinden.

Das Ein- bzw. Auftauchen der Druckplatten nach bestimmten betriebsbedingten Intervallen geschieht, damit eine fortdauernde, sich selbst unterhaltende und ausgeglichene Rotation der Hauptwelle gewährleistet ist. Das ist die Voraussetzung für eine gleichbleibende Energieabgabe seitens der Hauptwelle über ein Schaltgetriebe an ein Aggregat. Mit der Schaltung des Getriebes hat man die Möglichkeit, die Geschwindigkeiten der Strömungsmengen in dem Verbund mit den Druckplatten zu reduzieren, um den Wasserspiegel zu erhöhen, so daß ein Stau entsteht. Bei witterungsbedingtem Anfall großer Strömungsmengen wird man diese durch entsprechende Stufenschaltungen so regulieren, daß die gewünschte Höhe des Wasserspiegels erhalten bleibt. Die Höhe der Druckplatten hat sich nach den anfallenden Strömungsmengen zu orientieren bzw. nach der gewünschten Stauhöhe.

Der Höhenunterschied zwischen dem Wasserspiegel vor der Druckplatte und hinter derselben entspricht dem Strömungsdruck. Während des Betriebes halten die Druckplatten in allen Kanälen die gesamte Strömungsmenge zu jeder Zeit unter Kontrolle. Will man jedoch einen bestimmten ungehinderten Freifluß erreichen, um einmal die im Wasser mitgeführten Ablagerungen (Sedimente) am Boden der Kanäle abfließen zu lassen und zum anderen eine progressive Auslastung der Zylinderturbinen zu erreichen, muß man unterhalb aller Druckplatten in allen Kanälen einen Freiraum belassen.

Die Druckflächen-Kraftanlage könnte auch in einem vom Hauptfluß abgezweigten Nebenkanal installiert werden, wobei dann im Hauptfluß ein Schleusenwehr angeordnet sein müßte, um die für den Nebenkanal gewünschte Strömungsmenge unter allen in der Natur vorkommenden meteorologischen Bedingungen zu gewährleisten. Auch eine seitliche Abzweigung als Stichkanal mit eingebauter Schleuse würde ebenfalls geeignet sein, die Strömungsmenge z.B. im Hauptfluß automatisch zu kontrollieren.

Da Fremdkörper in den Strömungsmengen mitgeführt werden, obwohl eine grobere Filterung vorgenommen werden soll, empfiehlt es sich, vor den Rollen sogenannte Hartgummischalen o.ä. zu montieren, damit erstens die sich in den Strömungsmengen befindenden Bahnen der unteren Führungsnuten, speziell deren Decke, im waagerechten Bereich laufend säubern, und damit zweitens kleinere Sedimente aus den sich im Wasser befindenden Führungsnuten zum Kanalinneren, also zur Hauptströmung, geschoben werden.

Die untere wasserführende Führungsnut sollte durch eine flexible Gummiblende verdeckt sein, die wiederum auf der Ebene der Führungsnutenmitte zur Kanalinnenseite hin längsseitig geteilt ist, so daß die unteren Enden der Querstrebe durch diese hindurchgleiten können, wobei eine an der Querstrebe befestigte Kappe sich von der Kanalinnenseite her auf die Blende legt, auf dieser gleitet und evtl. Öffnungen in unmittelbarer Strebennähe abdeckt.

Soweit Druckflächen-Transmissions-Kraftanlagen in stark sedimenthaltigen, wie sand- oder geröllhaltigen, bewegten Gewässern anzuordnen sind, kann es eine weitere Aufgabe der Erfindung sein, eine Kraftanlage zu schaffen, bei der innerhalb dieser bewegten Gewässer keine Führungsmittel, sondern nur Druckplatten vorstehen.

Gemäß der weiteren Erfindung wird diese Aufgabe bei einer Kraftanlage dadurch gelöst, daß oberhalb einer endlosen Gliederkette, eines Seiles, eines Keilriemens o.dgl. an jeder sich gegenüberliegenden Seitenwand des Kanals vorzugsweise parallel zur Längsrichtung und im gewissen Abstand dazu nur eine Führungsnut angeordnet ist, in der am oberen Ende einer einzigen, zwischen den Gliederketten o.dgl. gelagerten Druckplatte, seitlich Gleitrollen laufen.

Weitere Merkmale ergeben sich aus den Unteransprüchen.

Ausführungsbeispiele der Erfindung sind in der Zeichnung dargestellt und werden im folgenden näher beschrieben.
Es zeigen:

Fig.1 eine perspektivische Ansicht einer aus
drei parallelen Kanälen bestehenden
einseitigen Zylinderturbinen;

Fig.1a eine abgeänderte Teilansicht der Zylindernabe mit seitlichem Abtrieb;

Fig.2 einen senkrechten, in Strömungsrichtung
verlaufenden Schnitt durch einen Kanal
der Einheit gemäß Fig.1;

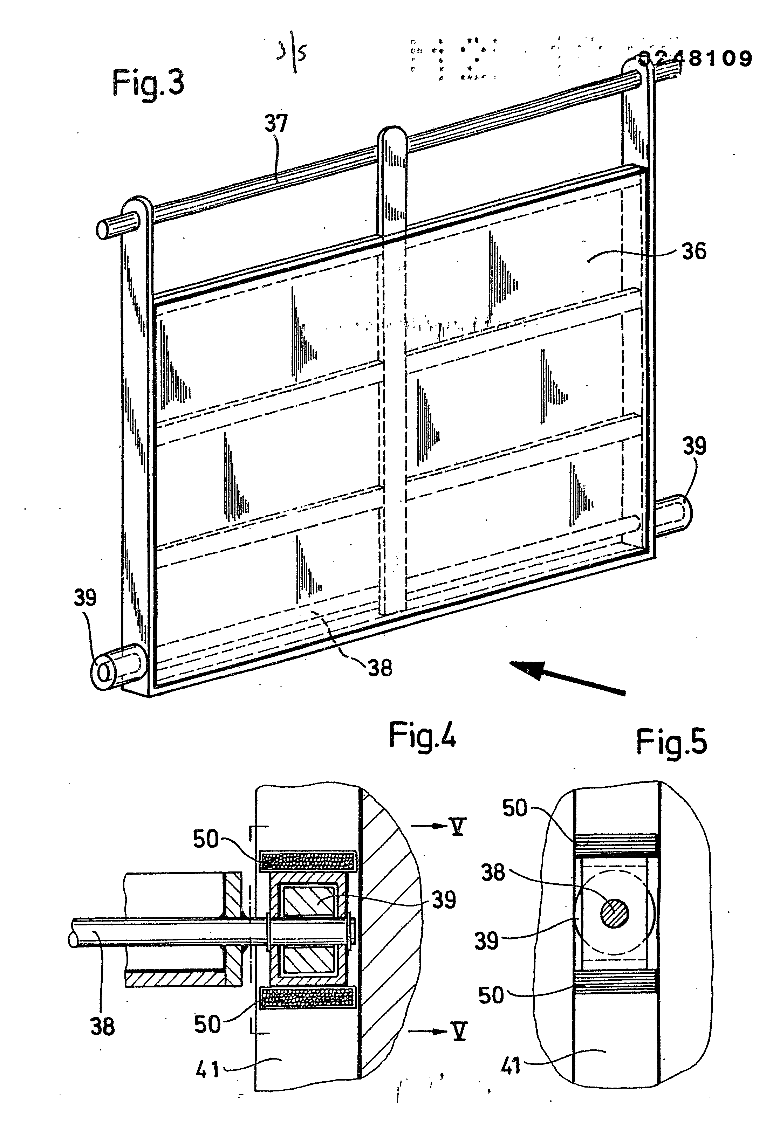

Fig.3 eine perspektivische Ansicht einer
Druckplatte;

Fig.4 einen waagerechten Schnitt durch die
Lagerung der unteren Druckplatte in der
unteren Führungsnut;

Fig.5 einen senkrechten Schnitt durch die
untere Bodenleiste der Druckplatte gemäß Linie V-V der Fig.4 mit der Darstellung der Lagerung;

Fig.6 einen vergrößerten Schnitt der Kanaleinlaufseite entsprechend Fig.2;

Fig.7     eine perspektivische Ansicht einer abgeänderten Kraftanlage mit unterem, führungselementefreiem Gewässerraum und außerhalb dieses Gewässerraumes angeordneter endloser Gliederkette mit oberer Führungsnut dafür.

Eine Kraftanlage kann mit drei parallelen, oben offenen Kanälen 30 mit gleichen rechteckigen Querschnitten versehen sein. In der Mitte aller Kanäle 30 ist quer zur Strömungsrichtung eine gemeinsame Hauptwelle 31 gelagert. Jede Seitenwand eines Kanals 30 enthält an der Innenseite eine Ausnehmung, in der sich ein mit der Hauptwelle 31 fest verbundenes angetriebenes Zahnrad 32 dreht. In der Ausnehmung einer Kanalseite ist auf jeder Kanalhälfte eine Endlos-Gliederkette 33 gelagert, die auf ein mit dem angetriebenen Zahnrad 32 der Hauptwelle 31 im Eingriff stehendes treibendes Zahnrad 34 und auf ein am Ende des Kanals 30 gelagertes Umlenkrad 35 gespannt ist.

Jeder Kanal 30 enthält zwei rechteckige Druckplatten 36, die mittels oberer und unterer, seitlich überstehender Querstreben 37 und 38 sich gegenseitig abstützen, mit ihren Enden jeweils in obere bzw. untere Führungsnuten 47 bzw. 41 hineinragen und untere Gleitrollen 39 tragen bzw. oben mit Gliederketten-Rollen 40 der Gliederketten 33 verbunden sind. Die vorstehenden Enden der oberen Querstreben 37 mit ihren verstärkten Gliederketten-Rollen 40 ragen waagerecht in die in den oberen Führungsnuten 47 liegenden Gliederketten 33 hinein. Sie sind Teile der endlosen Gliederketten 33, die an den Seitenwänden auf die als Umlenkräder wirkenden treibenden

Zahnräder 34 und weitere Umlenkräder 35 gespannt sind. Dabei bewegen sich die Gliederketten 33 parallel zur Strömung, wobei der untere Teil jeder Gliederkette sich in Strömungsrichtung und der obere Teil entgegen der Strömungsrichtung bewegt. Die in der ersten Kanalhälfte angeordneten Gliederketten 33 und die in der zweiten Kanalhälfte angeordneten Gliederketten 33 haben eine gemeinsame gerade Verbindungslinie, die parallel zum Kanalboden verläuft, der wiederum zwecks kontinuierlichen schnellen Auslaufs der nicht mehr benötigten Strömungsmengen ein Gefälle zum Ende der zweiten Kanalhälften von 1:20 oder je nach Bedarf von 1:15 hat. Die waagerechten Achsen aller treibenden Zahnräder 34 und Umlenkräder 35 haben den gleichen Abstand vom Boden des jeweiligen Kanals 30, während die Hauptwelle 31 höher liegt.

In den unteren Bereichen jedes Kanals 30 sind in den Seitenwänden die unteren Führungsnuten 41 angeordnet, die grundsätzlich einen anderen Verlauf haben als die oberen Führungsnuten 47. Einmal sind die Abstände der waagerechten Teile der oberen Führungsnuten 47 um das Doppelte oder auch um ein Mehrfaches geringer als diejenigen der unteren Führungsnuten 41. Zum anderen führt die untere Führungsnut 41 im vorderen rechten Teil (dem Einlaufbereich) jeder Kanalhälfte geradlinig, um ca. 10° vertikal zur Strömung geneigt, zum Kanalboden und hat an ihrem oberen Ende eine volle Öffnung, die nur durch eine vorgespannte Blattfeder 42 verdeckt ist. Am Ende jeder Kanalhälfte sind die beiden waagerechten unteren Führungsnuten 41 linksseitig mit einem gegenüber dem darüberliegenden Abtriebsrad vertikal versetzten Halbkreis verbunden.

Die unteren Führungsnuten 41 nehmen die Gleitrollen 39 der unteren Querstreben 38 auf, so daß hier eine untere Führung mit nur vertikaler Abstützung der Druckflächen 36 durch den Verlauf der unteren Führungsnuten 41 erfolgt. Die Druckflächen 36 erhalten die seitliche Führung durch die in den oberen Führungsnuten 47 liegenden Gliederketten 33, die in allen Kanalhälften gleich lang und um treibende Zahnräder 34 bzw. Umlenkräder 35 gespannt sind, die wiederum in allen Kanälen 30 gleichen Abstand voneinander haben. Bei dieser Gleichheit aller Abstände und Längen werden die von den Druckflächen 36 auf die Gliederketten 33, treibenden Zahnräder 34 bzw. Umlenkräder 35 übertragenen Kräfte auf die für alle Kanäle 30 arbeitende Hauptwelle 31 übertragen. Diese wiederum leitet

1. alle empfangenen Energien an ein Strom-Aggregat weiter,

2. sie koordiniert alle beweglichen Teile der Anlage und gleicht alle empfangenen evtl. unterschiedlichen Drücke und Schübe aus.

3. Durch ihre zentrale Lagerung und durch den gleichen Abstand aller treibenden Zahnräder 34 und Umlenkräder 35 von ihr gewährleistet sie die gleichzeitige Führung aller mit ihr im Verbund stehenden Druckflächen 36 im gleichen Rhythmus.

4. Sie verlagert die gewünschten Energiewerte der jeweils eingestellten Schaltstufe des Getriebes auf alle beweglichen Teile der Anlage kontinuierlich und gleichmäßig.

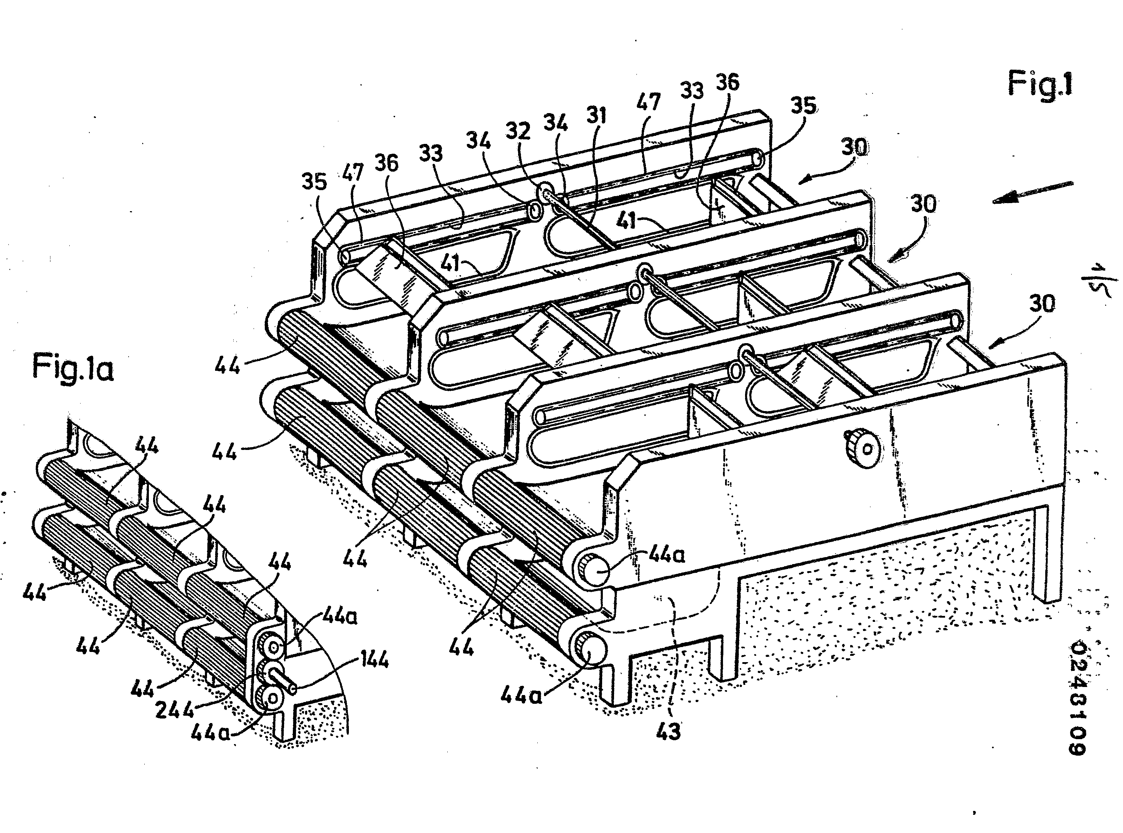

In Fig.1a ist eine seitlich vorstehende Abtriebswelle 144 dargestellt, die über ein zwischengeschaltetes Zahnrad 244 mit endseitigen Zahnrädern 44a zweier nachgeschalteter Zylinderturbinen 44 kraftschlüssig gekoppelt ist.

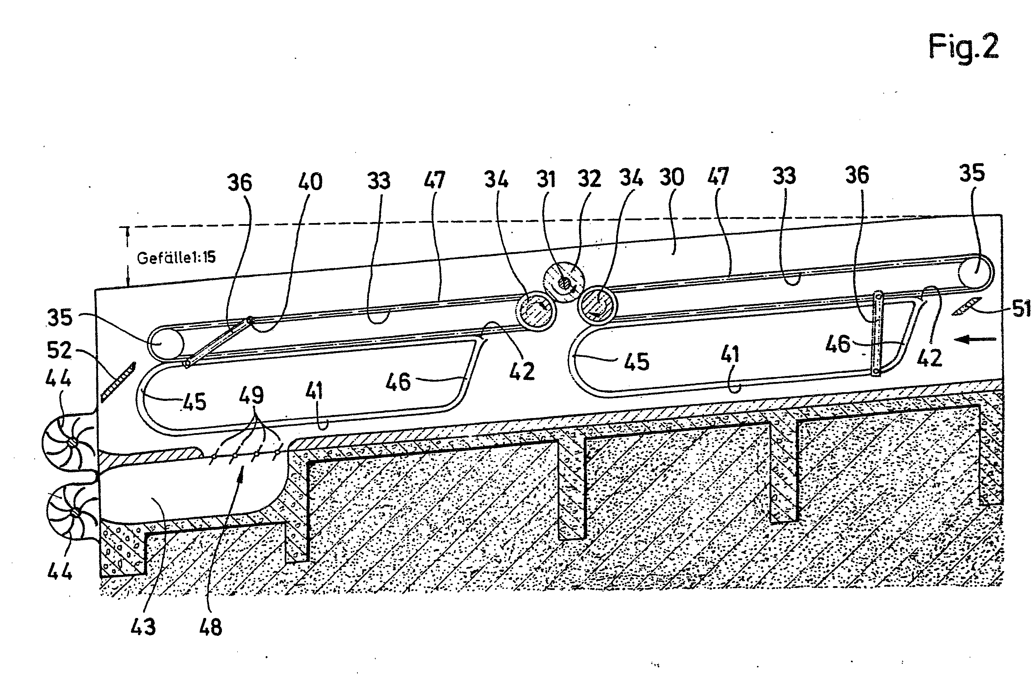

Gemäß Fig.2 der Zeichnung wurde das obere Teilende der unteren Führungsnut 41 mit einer Öffnung versehen, die durch eine vorgespannte Blattfeder 42 von oben abgedeckt ist, wobei der Drehpunkt der Feder links oben angeordnet ist. Wenn die Gleitrollen 39 der unteren Querstreben 38 diese Blattfeder 42 erreichen, wird die Vorspannung weiter vergrößert. Durch diesen vergrößerten Druck erhält die Gleitrolle 39 die Richtungsänderung nach unten in die um 10° geneigte, fast senkrechte Führungsnut 41.

Der Unterbau der Kraftanlage kann aus Stahlbeton ortsgebunden hergestellt sein, während der Oberbau vorzugsweise in Fabrikhallen ortsungebunden aus strukturierten Stahlblechkanälen einzeln gefertigt und zum Einsatzort transportiert sein kann, wobei die einzelnen Kanäle zu einem Ganzen zusammengefügt sind. Wenn der Oberbau aus durch Stahlprofile verstärkten Stahlblechen besteht, sind auch die Wandstärken der Kanäle entsprechend gering. In diesem Fall ergibt sich die Möglichkeit, die im Kanal nahe der Hauptwelle gegenüberliegenden treibenden Zahnräder der beiden nebeneinanderliegenden Kanäle mit einem zwischen ihnen liegenden und mit dem Antriebsrad der Hauptwelle verzahnten Antriebsrad in einem Block zu fertigen, damit Kosten erspart werden.

Im folgenden sind die einzelnen Phasen beschrieben, die bei einer im Betrieb befindlichen Kraftanlage ablaufen. Wie schon erwähnt, hat die beschriebene Druckflächen-Kraftanlage drei Kanäle. In diesen Kanälen 30 bewegen sich durch den Druck der Strömungsmassen je zwei Druckplatten 36 als Druckflächen geradlinig in Strömungsrichtung. Unterhalb dieser Druckplatten 36 ist in allen Kanälen 30 ein Freiraum belassen. Durch diesen fließen ununterbrochen Teile der Strömungsmassen am Boden jeden Kanals 30 entlang zu am Ende jedes Kanals 30 und eines jeden darunter befindlichen Bodenkanals 43 angeordneten Zylinderturbinen 44. Durch den kontinuierlichen Freifluß der am Boden jedes Kanals 30 fließenden Strömungsmassen wird Energie abgegeben und somit werden alle Zylinderturbinen 44 laufend in Bewegung gehalten.

Bei einer praxisnahen Geschwindigkeit der Strömungsmassen von 1m/s und einer Laufstrecke der Druckflächen 36 von 30 m in einer Kraftanlage ergibt sich gemäß Fig.1 folgendes Bild:

im hinteren Kanal 30:
    die rechte Druckplatte 36 ist eingetaucht seit 2 Sekunden, sie treibt die Hauptwelle 31 an,
    die linke Druckplatte 36 ist aufgetaucht seit 2 Sekunden, sie befindet sich auf dem Rückweg.

    Resultat: Alle Strömungsmassen fließen seit 2 Sekunden ab und treiben zusätzlich die beiden hinteren Zylinderturbinen 44 an;

im mittleren Kanal 30:
    die rechte Druckplatte 36 ist eingetaucht seit ca. 7 $\frac{1}{2}$ Sekunden, sie treibt die Hauptwelle 31 an, die linke Druckplatte 36 ist aufgetaucht seit ca. 7 $\frac{1}{2}$ Sekunden, sie befindet sich auf dem Rückweg.

Resultat: Alle Strömungsmassen fließen seit $7^1/2$
Sekunden ab und treiben zusätzlich die
mittleren Zylinderturbinen 44 und damit
die Abtriebswelle 144 an;

Bei den Laufzeiten sind zwei Sekunden für den Wechsel
der Druckplatten 36 nicht berücksichtigt.

im vorderen Kanal 30:

die rechte Druckplatte 36 ist aufgetaucht seit
2 Sekunden, sie befindet sich auf dem Rückweg,
die linke Druckplatte 36 ist eingetaucht seit
2 Sekunden, sie treibt die Hauptwelle 31 an.

Resultat: Alle Strömungsmassen fließen seit ca.
17 Sekunden ab und treiben zusätzlich
die beiden vorderen Zylinderturbinen
44 usw. an.

Wie man anhand dieser Beschreibung sieht, ist folgender
Allgemeinzustand der Druckflächen-Kraftanlage vorhanden:

1.  Drei Druckplatten 36 sind immer in der Strömung und
    treiben die Hauptwelle 31 mit der Ausnahme des zweisekundlichen Austausches der Druckplatten 36 in die
    andere Ebene.

2.  Außer der durch den Freifluß unter den Druckplatten
    36 gewonnenen, immer zur Verfügung stehenden Energie
    liefern zu jeder Zeit während des Betriebes der Anlage, genau wie die eingetauchten drei Druckplatten
    36, alle sechs Zylinderturbinen 44 die gewonnene
    Energie an ihre zugeordneten Abtriebsritzel.

Da die Strömungsmengen durch die Natur ohne große Kosten für die Menschheit erhältlich sind und die fossilen Energien immer teurer und rarer werden, könnten die Gedanken über Alternativenergien evtl. zur Lösung eines zukünftigen Energie-Engpasses beitragen. Zu erwähnen wäre noch die Möglichkeit, daß diese Anlagen wie früher beschrieben, in Rückhaltebecken, Stauseen und Flüssen eingebaut werden können und evtl. für den Einsatz in den Gezeitenzonen an bestimmten Küsten in Frage kommen. Einen besonderen Erfolg könnte der Einbau in Flüssen mit natürlichen hohen Uferböschungen versprechen, da diese einmal gute Staumöglichkeiten ergeben und zum anderen kann die Anlage in diesen gleichen Fluß immer wieder eingebaut werden, nachdem die Strömungsmedien eine bestimmte Beruhigungszone durchlaufen haben.

Jeder Kanal 30 enthält eine Einlaufblende 51, die sich als Leitschaufel an der Strömungseintrittsseite waagerecht quer zur Strömungsrichtung erstreckt und dort Turbulenzen von der eintauchenden Druckplatte 36 abhält. In entsprechender Weise ist an der Strömungsaustrittsseite jedes Kanals 30 eine waagerechte Auslaufblende 52 angeordnet, um die abfließenden Strömungsmengen auf die oberen Zylinderturbinen 44 zu leiten.

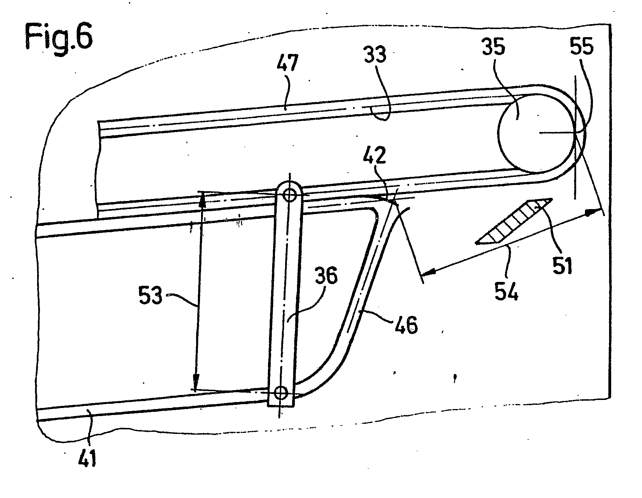

Der Abstand 53 in Fig.6 zwischen der oberen Querstrebe 37 und der unteren Querstrebe 38 der Druckplatte 36 ist genauso groß, wie der Abstand 54 des Schnittpunkts der Mittellinien des oberen Teils der unteren Führungsnut 41 und der Nutenstrecke 46 (im Bereich der Blattfeder 42) von dem Berührungspunkt 55 der äußeren senkrechten Tangente an dem Umlenkrad 35.

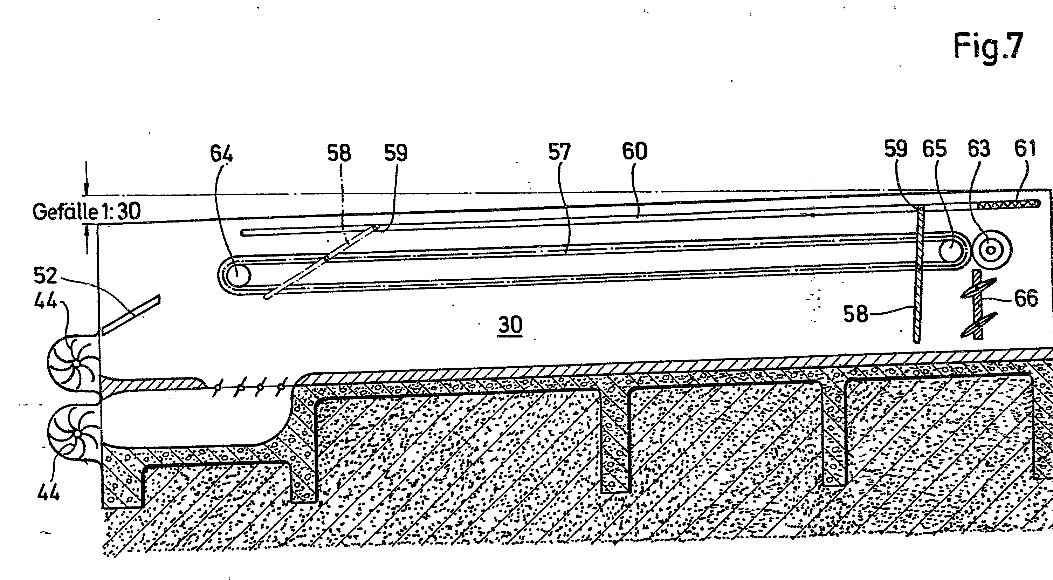

Bei der in Fig.7 abgeänderten Ausführungsform der Transmissionsanlage sind die in Fig. 1, 2 und 6 dargestellten unteren Führungsnuten 41 fortgelassen, so daß der Bereich des strömenden Gewässers sowohl von sich bewegenden Gliederketten mit Querstreben als auch seitlichen Führungsnuten in den Seitenwänden jedes Kanals frei sind.

Die Seitenwände sind daher bei der abgeänderten Ausführung glatt.

Zur Führung der im strömenden Gewässer notwendigerweise sich bewegenden Druckplatten 58 ist oberhalb einer alleinigen (oberen) endlosen Gliederkette 57 an jeder sich gegenüberliegenden Seitenwand eines Kanals 30 vorzugsweise parallel zur Längsrichtung (Längsebene) der Gliederkette 57 und im gewissen Abstand dazu eine Führungsnut 60 eingearbeitet, die vorzugsweise gerade verläuft und in welcher am oberen Ende einer einzigen Druckplatte 58 gelagerte Gleitrollen 59 (entsprechend Gleitrollen 39) laufen und damit im oberen Bereich diese Druckplatte 58 halten und gelenkig führen.

Zur Aufnahme der oberen Führungsnut 60 ist die Seitenwand des Kanals 30 erhöht.

Die Druckplatte 58 steht mit ihrer unteren Hälfte über die (waagerechte) Längsebene des unteren Trums der Gliederkette 57 weit vor und kann in senkrechter Stellung (vergl. Fig.7) in das strömende Gewässer eintauchen.

In dieser Führungsnut 60, die stromaufwärts verlängert ist, erstreckt sich eine kurze Druckfeder 61, die von der Gleitrolle 59 kurz vor dem Eintauchen der Druckplatte 58 gespannt (zusammengedrückt) wird.

Der Entspannungsdruck dieser Druckfeder 61 begünstigt in der letzten Hälfte des Eintauchvorganges in Verbindung mit der Gliederkette 57 die Positionsänderung der Druckplatte 58 aus der Schräglage in die fast senkrechte Stellung im eingetauchten Zustand wirkungsvoll. Unterstützt wird dieser Vorgang noch durch die während des Umlenkprozesses sowieso geschlossene Schleuse 66, die zu diesem Zeitpunkt den Gewässerdruck von der Druckplatte 58 fernhält, die in ihrer gedachten waagerechten Mittelachse an den Rollen der Gliederketten (vergl. Gliederketten-Rollen 40) angelenkt ist, so daß sie um deren Achse schwenken kann.

Die Druckplatte 58 ist gemäß Fig.7 um den Abstand verlängert, der zwischen den Mittelpunkten der Ketten-. bzw. Gleitrollen 59 besteht. Dieser mittige Abstand sichert die oben leicht zur Strömungsseite geneigte, fast senkrechte Stellung der Druckplatte 58 auf der geraden Laufstrecke und die funktionsbedingte jeweilige Position oder Lage derselben beim Ein- und Auftauchen in der Nähe des Umlenkrades 64 bzw. Antriebs-Umlenkrades 65.

Sobald diese Gliederkettenrollen bei den abwärtsseitigen Umlenkrädern 64 (vergl.34) ankommen, schwenkt die Druckplatte 58 in eine Schräglage (vergl.Fig.7) und wandert in dieser Schräglage bis zum oberen Umlenkrad 65 (vergl. 35) zurück.

Das obere Umlenkrad 65 arbeitet mit einem Zahnrad 63 als treibendes Zahnrad zur Kraftübertragung zusammen, das mit der Hauptwelle kraftschlüssig verbunden ist. Unterhalb dieses Zahnrades 63 ist eine Schleuse 66 vorgesehen, die geöffnet wird, wenn die Druckplatte 58

0248109

wieder in das Gewässer eingetaucht ist, und geschlossen wird, wenn die Druckplatte 58 sich aus dem Gewässer heraushebt.

Diese Schleuse 66 hat folgende Funktionen während des Betriebs zu erfüllen:

1. Durch ihre Schließung soll sie nach dem Auftauchen der Druckplatte 58 aus dem Gewässer dessen vollständigen Ablauf aus dem Kanal sicherstellen und nur das Kanalvolumen den zwei Zylinderturbinen 44 zuführen;

2. während der Zeitspanne des Auftauchens der Druckplatte 58, des Rückweges zu der Eintauchlinie und des Eintauchens in das Gewässer soll sie den Strömungsfluß unterbrechen und den Zufluß stauen;

3. den Fließdruck des Gewässers von der eintauchenden Druckplatte 58 fernhalten, damit diese ohne Überwindung irgendeines Widerstandes eintauchen kann.

Sollte die Anlage in einen Fluß mit entsprechend natürlich erhöhten Uferböschungen eingebaut sein, wo eine praxisnahe Geschwindigkeit des Gewässers von 1m/sec. vorhanden ist und der Kanal eine Laufstrecke von z.B. 30 m hat, dann ergbit sich eine Zeitspanne von 30 sec. einmal für den vollständigen Abfluß der Wassermenge aus dem Kanal und zum anderen für den Rückweg der Druckplatte 58 zum Eintauchpunkt.

Nachdem die Druckplatte 58 eingetaucht ist, öffnet sich die Schleuse 66 und gibt die Wassermenge frei. Die Druckplatte 58 wird nun von den Wassermassen zum unteren Kanalende geschoben, wobei sie durch ihre Verbindungen zur Gliederkette 57 und zur Führungsnut 60 immer in fast senkrechter Stellung gehalten ist.

Erreicht die Druckplatte 58 das untere Kanalende, wird kurz vor ihrem Auftauchen die Schleuse 66 geschlossen, die Druckplatte 58 taucht auf und begibt sich auf den Rückweg zum Eintauchpunkt zurück, während alle im Kanal befindlichen Wassermassen abfließen und die Zylinderturbinen 44 am unteren Ende des Kanals 30 verstärkt treiben.

Dieser beschriebene Vorgang wiederholt sich in allen nebeneinanderliegenden Kanälen 30 in unterschiedlichen, aber zeitlich gleichen Intervallen.

Zu dem normalen, von der Höhe des Wasserstandes abhängigen statischen Druck, kommt noch der große Fließdruck, der auf die Zylinderturbinen 44 drückt, wenn die auftauchende Druckplatte 58 die Wassermassen plötzlich freigibt.

Die Verlegung der Führungsnut 60 oberhalb des Gewässers ist aus sicherheits- und funktionstechnischen Gründen vorteilhaft.

**Patentanwalt**

# Dipl.-Ing. Th. Hoefer

0248109

4800 Bielefeld 1, den
Kreuzstraße 32
Telefon (05 21) 17 10 72 - Telex 9-32 449

Bankkonten: Commerzbank AG, Bielefeld 6 851 471 (BLZ 480 400 35)
Sparkasse Bielefeld 72 001 563 (BLZ 480 501 61)
Postscheckkonto: Amt Hannover 689 28-304

Zugelassener Vertreter beim Europäischen Patentamt
Prof. Representative before the European Patent Office
Mandataire agréé près l'Office européen des brevets

Herr Ferdinand Klute, Fixberg 6, 4790 Paderborn

## Druckflächen-Transmissions-Kraftanlage

## Patentansprüche

1. Druckflächen-Transmissions-Kraftanlage zur Nutzbarmachung der natürlichen Strömungsgefälle von Wasser- und Windmengen, mit mehreren gleichartigen, parallel angeordneten, nach oben offenen Kanälen mit jeweils rechteckigem Querschnitt, wobei in jedem Kanal zwei mit einer Hauptwelle verbundene, als Antriebe wirkende rechteckige, in Querschnittsebenen des Kanals sich erstreckende Druckplatten in Strömungsrichtung geradlinig verschiebbar angeordnet sind, die in oberen und unteren umlaufenden Führungsnuten der Kanalwände geführt sind, wobei jede Führungsnut zwei übereinander verlaufende waagerechte Teile

- 2 -

aufweist, die strömungsauslaufseitig durch halbkreisförmige Nutenbögen miteinander verbunden sind, dadurch gekennzeichnet, daß jeweils der Nutenbogen (45) der unteren Führungsnut (41) unterhalb eines Umlenkrades (35) bzw. eines. als Umlenkrad wirkenden treibenden Zahnrades (34) einer in der oberen Führungsnut (47) verlaufenden Gliederkette (33) in Strömungsrichtung versetzt angeordnet ist, während die waagerechten Teile strömungseinlaufseitig durch eine geradlinige, zum Kanalboden in einem spitzen Winkel stehende Nutenstrecke (46) miteinander verbunden sind, die an ihrem unteren Ende über einen Bogen mit dem unteren waagerechten Teil der unteren Führungsnut (41) verbunden ist.

2. Kraftanlage nach Anspruch 1, dadurch gekennzeichnet, daß der Abstand zwischen den waagerecht verlaufenden Teilen der insich geschlossenen, seitlich in den Kanalwänden angeordneten oberen Führungsnuten (47) um ein Mehrfaches geringer ist, als der Abstand der waagerechten Teile der unteren Führungsnuten (41), die ebenfalls in den Kanalwänden angeordnet sind.

3. Kraftanlage nach den Ansprüchen 1 und 2, dadurch gekennzeichnet, daß der waagerechte obere Teil der unteren Führungsnut (41) an seinem strömungseinlaufseitigen Ende eine Öffnung hat, die durch eine vor-gespannte Blattfeder (42) abgedeckt ist und deren vordere Kante vor der geraden Nutenstrecke (46) endet.

4. Kraftanlage nach den Ansprüchen 1 bis 3, dadurch gekennzeichnet, daß bei schmalen, als Stahlkonstruktionen hergestellten Kanalseitenwänden sich nur ein Antriebsrad (32) der Hauptwelle (31) mit auch nur einem als Umlenkrad wirkenden treibenden Zahnrad (34) im Eingriff befindet, welches beidseitig mit einem Umlenkrad verbunden ist und beide Umlenkräder sich in den angrenzenden und benachbarten Kanalseitenwänden gegenüberliegen.

5. Kraftanlage nach den Ansprüchen 1 bis 4, dadurch gekennzeichnet, daß sich in jeder strömungsauslaufseitigen Kanalhälfte im Kanalboden eine Fallschleuse (48) mit vorzugsweise fest eingestellten Leitschaufeln (49) befindet.

6. Kraftanlage nach den Ansprüchen 1 bis 5, dadurch gekennzeichnet, daß sich unterhalb jeder Fallschleuse (48) ein geschlossener Bodenkanal (43) befindet, der eine schaufelartige Begrenzung hat und nur strömungsauslaufseitig zur Abflußseite hin voll geöffnet ist.

7. Kraftanlage nach den Ansprüchen 1 bis 6, dadurch gekennzeichnet, daß sich am strömungsauslaufseitigen Ende jedes Kanals (30) eine obere Zylinderturbine (44) befindet und unterhalb dieser am unteren Ende jedes Bodenkanals (43) eine untere Zylinderturbine (44) gelagert ist, wobei alle Zylinderturbinen (44) eine Länge haben, die dem Innenmaß der Kanäle (30) gleich ist.

8. Kraftanlage nach den Ansprüchen 1 bis 7, dadurch gekennzeichnet, daß sich an den Druckplatten (36) untere Querstreben (38) befinden, deren beidseitige Zapfen mit Gleitrollen (39) versehen sind, die vor und hinter sich Reinigungsbürsten (50) haben, die axial drehbar auf den Zapfen der unteren Querstreben (38) gelagert sind und in der Ausdehnung dem Querschnitt der unteren Führungsnuten (41) entsprechen.

9. Kraftanlage nach den Ansprüchen 1 bis 8, dadurch gekennzeichnet, daß der Unterbau der gesamten Anlage aus Betonpfeilern sowie einer Betondecke besteht und am Betriebsort herstellbar ist, während der Oberbau u.a. aus einzelnen strukturierten Stahlblechkanälen besteht, wobei am Betriebsort die einzelnen Kanäle zu einer Gesamtanlage zusammenfügbar sind.

10. Kraftanlage nach den Ansprüchen 1 bis 9, dadurch gekennzeichnet, daß der Abstand (54) zwischen der äußeren rechtsseitigen Tangente eines rechten Umlenkrades (35) und dem Schnittpunkt der unteren Führungsnut (41) mit der Nutenstrecke (46) identisch ist mit dem axialen Abstand zwischen der oberen Querstrebe (37) und der unteren Querstrebe (38).

11. Kraftanlage nach den Ansprüchen 1 bis 10, dadurch gekennzeichnet, daß von den beiden Druckplatten (36) eines Kanals (30) sich eine in einer oberen Bewegungsebene außerhalb des strömenden Mediums in einer diagonalen Schräglage befindet, während die andere in einer unteren Bewegungsebene innerhalb des strömenden Mediums eine fast senkrechte Position hat.

12. Kraftanlage, insbesondere nach den Ansprüchen 1
bis 11, gekennzeichnet durch eine oberhalb einer
endlosen Gliederkette, eines Seiles, eines Keilriemens, o.dgl. an jeder sich gegenüberliegenden
Seitenwand des Kanals (30) vorzugsweise parallel
zur Längsrichtung der Gliederkette (57) o.dgl. und
im gewissen Abstand dazu angeordnete Führungsnut
(60), in der am oberen Ende einer einzigen zwischen
den Gliederketten (57) o.dgl. gelagerten Druckplatte
(58) seitlich Gleitrollen (59) laufen.

13. Kraftanlage nach Anspruch 12, dadurch gekennzeichnet,
daß die Druckplatte in ihrem mittleren Bereich an
der Gliederkette (57) o.dgl. angelenkt ist und nach
unten in den führungselementefreien Gewässerraum
vorsteht.

14. Kraftanlage nach Anspruch 12 oder 13, dadurch gekennzeichnet, daß in der Führungsnut (60) an den
Enden ein- oder beidseitig eingelegte Druckfedern
(61) angeschlagen sind.

Fig.1

Fig.1a

Fig.2

Gefälle1:15

Fig.3

Fig.4

Fig.5

0248109

# Fig.6

Fig.7

0248109

Europäisches
Patentamt

**EUROPÄISCHER RECHERCHENBERICHT**

Nummer der Anmeldung

EP 86 11 4841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-3 407 944 (KLUTE) <br> * Seite 6, Zeile 14 - Ende * | 1 | F 03 B 9/00 |
| A | | 4 | |
| Y | NL-C- 4 976 (ROOSA) <br> * Seite 2, Zeile 14 - Seite 3, Zeile 86 * | 1 | |
| A | | 2,8,11 | |
| A | US-A-3 882 320 (SCHMELLER) <br> * Spalte 1, Zeile 59 - Spalte 2, Zeile 44 * | 9 | |
| A | US-A-3 927 330 (SKORUPINSKI) <br> * Zusammenfasssung * | 5,6,9 | RECHERCHIERTE SACHGEBIETE (Int. Cl. ³) |
| A | GB-A- 859 007 (MATTHEWMAN) <br> * Seite 2, Zeile 1 - Seite 3, Zeile 5 * | 12,13 | F 03 B <br> F 03 D |

Der vorliegende Recherchenbericht wurde für alle Patentansprüche erstellt.

| Recherchenort <br> DEN HAAG | Abschlußdatum der Recherche <br> 07-09-1987 | Prüfer <br> DE WINTER P.E.F. |
|---|---|---|